(19) Europäisches Patentamt
European Patent Office
Office européen des brevets

(11) **EP 3 982 063 A1**

(12) **EUROPEAN PATENT APPLICATION**
published in accordance with Art. 153(4) EPC

(43) Date of publication:
**13.04.2022 Bulletin 2022/15**

(21) Application number: **19931732.2**

(22) Date of filing: **04.06.2019**

(51) International Patent Classification (IPC):
**F25B 49/02** (2006.01)    **F24F 11/38** (2018.01)
**F25B 13/00** (2006.01)    **F24F 140/12** (2018.01)
**F24F 140/20** (2018.01)

(52) Cooperative Patent Classification (CPC):
**F24F 11/38; F25B 13/00; F25B 49/02**

(86) International application number:
**PCT/JP2019/022184**

(87) International publication number:
**WO 2020/245918 (10.12.2020 Gazette 2020/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **MITSUBISHI ELECTRIC CORPORATION**
**Chiyoda-ku**
**Tokyo 100-8310 (JP)**

(72) Inventor: **OCHIAI, Yasutaka**
**Tokyo 100-8310 (JP)**

(74) Representative: **Bongiovanni, Simone et al**
**Studio Torta S.p.A.**
**Via Viotti, 9**
**10121 Torino (IT)**

(54) **REFRIGERATION CYCLE DEVICE**

(57)    A refrigeration cycle apparatus includes a refrigeration cycle circuit connecting a compressor, a refrigerant flow switching device, an outdoor heat exchanger, an expansion valve, and an indoor heat exchanger, a first junction portion provided between the outdoor heat exchanger and the expansion valve and configured to divide refrigerant, a second junction portion provided between the indoor heat exchanger and the refrigerant flow switching device and configured to divide the refrigerant, a bypass pipe connecting the first junction portion and the second junction portion and configured to cause the refrigerant to flow through the bypass pipe, a first valve provided between the second junction portion and the refrigerant flow switching device, a second valve provided to the bypass pipe, a first temperature sensor configured to measure a temperature in a room to which air passing through the indoor heat exchanger is provided, and a second temperature sensor configured to measure a temperature of refrigerant at a liquid portion of the indoor heat exchanger. In an operation status in which the compressor operates, the expansion valve is fully closed, the first valve is opened, and the second valve is closed, when a temperature measured by the first temperature sensor and a temperature measured by the second temperature sensor are different from each other, the refrigeration cycle apparatus is configured to detect an abnormality at at least one of the expansion valve and the second valve.

EP 3 982 063 A1

# FIG. 1

EXTRACTION UNIT    3 2

CALCULATION UNIT    3 3

COMPARISON UNIT    3 4

DETERMINATION UNIT    3 5

STORAGE UNIT    3 1

3

NOTIFI-CATION UNIT    3 6

OPERATION MODE SWITCHING UNIT    3 7

**Description**

Technical Field

The present disclosure relates to a refrigeration cycle apparatus including a refrigeration cycle circuit, and in particular, relates to abnormality detection for a valve in the circuit.

Background Art

A known air-conditioning apparatus detects an abnormality at an expansion valve by the known air-conditioning apparatus (refer to Patent Literature 1, for example).
This air-conditioning apparatus includes a compressor, a condenser, an electronic expansion valve, and an evaporator. A temperature sensor configured to measure a temperature of the evaporator is provided between the electronic expansion valve and the evaporator. In addition, a temperature sensor configured to measure a temperature of suctioned air is provided at an inlet of the evaporator. An abnormality detector performs abnormality detection for the electronic expansion valve on the basis of temperatures measured by the temperature sensors.

Citation List

Patent Literature

Patent Literature 1: Japanese Unexamined Patent Application Publication No. 2000-274896

Summary of Invention

Technical Problem

For example, a variable refrigerant flow system capable of performing a cooling and heating mixed operation includes two solenoid valves for each of multiple indoor heat exchangers configured to switch between refrigerant flow directions in each indoor heat exchanger. In such a refrigeration cycle apparatus in which an electronic expansion valve and two solenoid valves are provided for each indoor heat exchanger, it may be difficult to accurately detect an abnormality at any of the electronic expansion valve and the solenoid valves.
In response to the above issue, it is an object of the present disclosure to provide a refrigeration cycle apparatus that can more accurately detect an abnormality at a valve.

Solution to Problem

A refrigeration cycle apparatus according to an embodiment of the present disclosure includes a refrigeration cycle circuit connecting a compressor, a refrigerant flow switching device, an outdoor heat exchanger, an expansion valve, and an indoor heat exchanger and configured to circulate refrigerant, a first junction portion provided between the outdoor heat exchanger and the expansion valve and configured to divide the refrigerant, a second junction portion provided between the indoor heat exchanger and the refrigerant flow switching device and configured to divide the refrigerant, a bypass pipe connecting the first junction portion and the second junction portion and configured to cause the refrigerant to flow through the bypass pipe, a first valve provided between the second junction portion and the refrigerant flow switching device, a second valve provided to the bypass pipe, a first temperature sensor configured to measure a temperature in a room to which air passing through the indoor heat exchanger is provided, and a second temperature sensor configured to measure a temperature of refrigerant at a liquid portion of the indoor heat exchanger. In an operation status in which the compressor operates, the expansion valve is fully closed, the first valve is opened, and the second valve is closed, when a temperature measured by the first temperature sensor and a temperature measured by the second temperature sensor are different from each other, the refrigeration cycle apparatus is configured to detect an abnormality at at least one of the expansion valve and the second valve.

Advantageous Effects of Invention

According to an embodiment of the present disclosure, in the operation status in which the expansion valve is fully closed, the first valve is opened, and the second valve is closed, an abnormality at at least one of the expansion valve and the second valve causes a temperature measured by the first temperature sensor and a temperature measured by the second temperature sensor to be different from each other.

According to an embodiment of the present disclosure, therefore, an abnormality at at least one of the expansion valve and the second valve can be detected more accurately by determining whether the temperature measured by the first temperature sensor and the temperature measured by the second temperature sensor are different from each other.

Brief Description of Drawings

[Fig. 1] Fig. 1 is a diagram illustrating the configuration of a refrigeration cycle apparatus according to Embodiment 1.
[Fig. 2] Fig. 2 is a diagram illustrating exemplary patterns of combinations of states into which an electronic expansion valve 21a, a low-pressure valve 45a, and a high-pressure valve 46a may be brought in the refrigeration cycle apparatus according to Embodiment 1.
[Fig. 3] Fig. 3 is a diagram illustrating operations of the electronic expansion valve 21a, the low-pressure valve 45a, and the high-pressure valve 46a in State Pattern 1 in the refrigeration cycle apparatus according to Embodiment 1.
[Fig. 4] Fig. 4 is a diagram illustrating a graph showing a refrigerant temperature distribution in an indoor heat exchanger 22a in State Pattern 1 in the refrigeration cycle apparatus according to Embodiment 1.
[Fig. 5] Fig. 5 is a diagram illustrating operations of the electronic expansion valve 21a, the low-pressure valve 45a, and the high-pressure valve 46a in State Pattern 2 in the refrigeration cycle apparatus according to Embodiment 1.
[Fig. 6] Fig. 6 is a diagram illustrating a graph showing a refrigerant temperature distribution in the indoor heat exchanger 22a in State Pattern 2 in the refrigeration cycle apparatus according to Embodiment 1.
[Fig. 7] Fig. 7 is a diagram illustrating operations of the electronic expansion valve 21a, the low-pressure valve 45a, and the high-pressure valve 46a in State Pattern 3 in the refrigeration cycle apparatus according to Embodiment 1.
[Fig. 8] Fig. 8 is a diagram illustrating graphs each showing a refrigerant temperature distribution in the indoor heat exchanger 22a in State Pattern 3 in the refrigeration cycle apparatus according to Embodiment 1.
[Fig. 9] Fig. 9 is a diagram illustrating a flowchart of an exemplary procedure of a first abnormality detection process, which is performed by a controller 3 of the refrigeration cycle apparatus according to Embodiment 1.
[Fig. 10] Fig. 10 is a diagram illustrating a flowchart of an exemplary procedure of a second abnormality detection process, which is performed by the controller 3 of the refrigeration cycle apparatus according to Embodiment 1.
[Fig. 11] Fig. 11 is a diagram illustrating a flowchart of an exemplary procedure of a third abnormality detection process, which is performed by the controller 3 of the refrigeration cycle apparatus according to Embodiment 1.

Description of Embodiments

Refrigeration cycle apparatuses according to embodiments will be described below with reference to the drawings, for example. Note that components designated by the same reference signs in the figures are the same components or equivalents. This note applies to the entire description of the embodiments described below. Furthermore, note that the relationship between the sizes of components in the figures may differ from that between the actual sizes of the components. Additionally, note that the forms of the components described herein are intended to be illustrative only and the forms of the components are not intended to be limited to those described herein. In particular, combinations of the components are not intended to be limited only to those in the embodiments. A component in one embodiment can be used in another embodiment. High and low values of, for example, temperature and pressure, are not determined in relation to particular absolute values but are relatively determined on the basis of, for example, a status or an operation of, for example, an apparatus.
For multiple devices of the same type that are, for example, distinguished from each other using letters, if the devices do not have to be distinguished from each other or specified, the letters may be omitted.

Embodiment 1

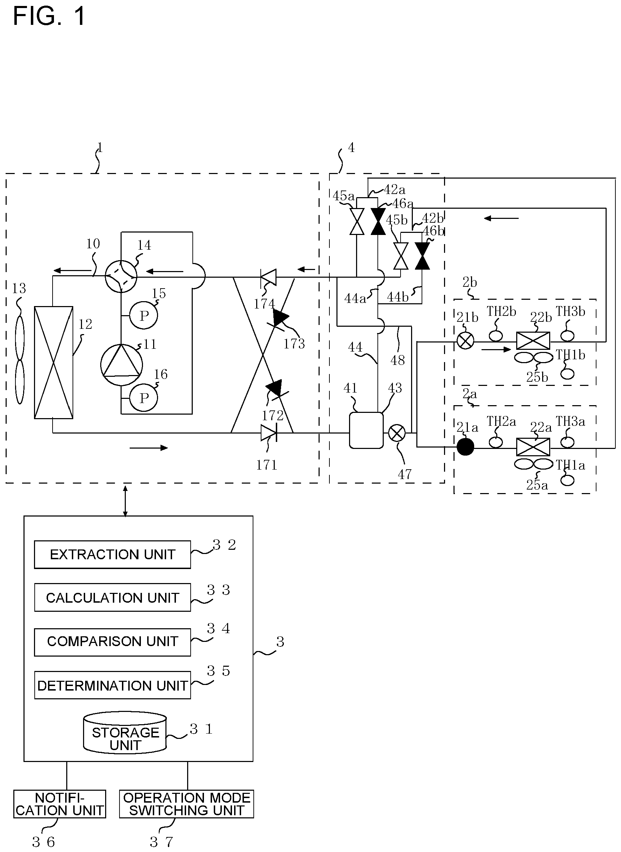

Fig. 1 is a diagram illustrating the configuration of a refrigeration cycle apparatus according to Embodiment 1. In Embodiment 1, a variable refrigerant flow system capable of performing a cooling and heating mixed operation is illustrated as an exemplary refrigeration cycle apparatus. As illustrated in Fig. 1, the refrigeration cycle apparatus according to Embodiment 1 includes a refrigeration cycle circuit 10 configured to circulate refrigerant and a controller 3 configured to control the entire refrigeration cycle apparatus including the refrigeration cycle circuit 10. In Embodiment 1, as illustrated in Fig. 1, the refrigeration cycle apparatus includes an outdoor unit 1, an indoor unit 2a, an indoor unit 2b, and a flow dividing controller 4. For example, components that form the refrigeration cycle circuit 10 are separated and held in the outdoor unit 1, the indoor units 2a and 2b, and the flow dividing controller 4.
The refrigeration cycle circuit 10 includes a compressor 11, a refrigerant flow switching device 14, an outdoor heat exchanger 12, an electronic expansion valve 21a, an electronic expansion valve 21b, an indoor heat exchanger 22a, and an indoor heat exchanger 22b, which are connected in a loop by refrigerant pipes. In the refrigeration cycle circuit 10, a combination of the electronic expansion valve 21a and the indoor heat exchanger 22a and a combination of the electronic expansion valve 21b and the indoor heat exchanger 22b are connected in parallel with each other. Although, in Embodiment 1, the number of combinations each including the electronic expansion valve 21 and the indoor heat exchanger 22 is specified to two, the number of combinations each including the electronic expansion valve 21 and the indoor heat exchanger 22 may be one or three or more.

The refrigeration cycle circuit 10 includes a bypass passage 44 including a bypass pipe configured to cause the refrigerant to bypass the electronic expansion valves 21a and 21b and the indoor heat exchangers 22a and 22b and flow through the bypass pipe. One end of the bypass passage 44 is connected to a first junction portion 41 provided between the outdoor heat exchanger 12 and the electronic expansion valves 21a and 21b in the refrigeration cycle circuit 10. The first junction portion 41 includes a gas-liquid separator 43.

The other end of the bypass passage 44 branches out into multiple branch passages, namely a branch passage 44a and a branch passage 44b, which are included in the bypass pipe. The branch passage 44a and the branch passage 44b are respectively provided for the indoor unit 2a and the indoor unit 2b, which will be described later. The branch passages 44a and 44b are equal in number to the indoor units 2a and 2b, or the indoor heat exchangers 22a and 22b. The branch passage 44a is connected to a second junction portion 42a provided between the indoor heat exchanger 22a and the refrigerant flow switching device 14 in the refrigeration cycle circuit 10. The branch passage 44b is connected to a second junction portion 42b provided between the indoor heat exchanger 22b and the refrigerant flow switching device 14 in the refrigeration cycle circuit 10. The second junction portions 42a and 42b are provided for the indoor units 2a and 2b, respectively. The second junction portions 42a and 42b are equal in number to the indoor units 2a and 2b, or the indoor heat exchangers 22a and 22b.

A low-pressure valve 45a is provided between the second junction portion 42a and the refrigerant flow switching device 14 in the refrigeration cycle circuit 10. In addition, a low-pressure valve 45b is provided between the second junction portion 42b and the refrigerant flow switching device 14 in the refrigeration cycle circuit 10. Each of the low-pressure valves 45a and 45b, through which low-pressure refrigerant mainly passes, is an example of a first valve. The low-pressure valves 45a and 45b are provided for the indoor units 2a and 2b, respectively. The low-pressure valves 45a and 45b are equal in number to the indoor units 2a and 2b, or the indoor heat exchangers 22a and 22b.

A high-pressure valve 46a is provided between the branch passage 44a of the bypass passage 44 and the second junction portion 42a. In addition, a high-pressure valve 46b is provided between the branch passage 44b of the bypass passage 44 and the second junction portion 42b. Each of the high-pressure valves 46a and 46b, through which high-pressure refrigerant mainly passes, is an example of a second valve. The high-pressure valves 46a and 46b are provided for the indoor units 2a and 2b, respectively. The high-pressure valves 46a and 46b are equal in number to the indoor units 2a and 2b, or the indoor heat exchangers 22a and 22b.

As described above, the refrigeration cycle apparatus includes the outdoor unit 1, the flow dividing controller 4, and the two indoor units 2a and 2b. The devices in the outdoor unit 1 are connected to the devices in the flow dividing controller 4 by two refrigerant pipes. Furthermore, the devices in the flow dividing controller 4 are connected to the devices in each of the indoor units 2a and 2b by two refrigerant pipes. Although the single outdoor unit 1 is illustrated in Embodiment 1, the number of outdoor units 1 may be two or more. In addition, although the single flow dividing controller 4 is illustrated in Embodiment 1, the number of flow dividing controllers 4 may be two or more. Additionally, although the two indoor units 2a and 2b are illustrated in Embodiment 1, the number of indoor units 2 may be one or three or more. The outdoor unit 1 may be connected to the flow dividing controller 4 by three refrigerant pipes.

The outdoor unit 1 is installed outside, for example, a building. The outdoor unit 1 holds the compressor 11, the refrigerant flow switching device 14, the outdoor heat exchanger 12, and check valves 171 to 174. The outdoor unit 1 further holds an outdoor fan 13, a high-pressure-side pressure sensor 15, and a low-pressure-side pressure sensor 16.

The compressor 11 is fluid machinery configured to suction low-pressure and low-temperature gas refrigerant, compress the refrigerant into high-pressure and high-temperature gas refrigerant, and discharge the refrigerant. As the compressor 11 operates, the refrigerant is circulated through the refrigeration cycle circuit 10. As the compressor 11, an inverter-driven compressor whose operating frequency is adjustable is used. The operation of the compressor 11 is controlled by the controller 3.

The refrigerant flow switching device 14 is a valve configured to switch between a refrigerant flow direction for a cooling main operation and a refrigerant flow direction for a heating main operation. The controller 3 controls the refrigerant flow switching device 14 such that passages represented by solid lines in Fig. 1 are set in the cooling main operation and passages represented by broken lines in Fig. 1 are set in the heating main operation. The cooling main operation is an operation mode that is executed when a cooling load is larger than a heating load in the indoor units 2a and 2b. The cooling main operation includes a cooling only operation in which all of the indoor units 2a and 2b perform a cooling operation. The heating main operation is an operation mode that is executed when the heating load is larger than the cooling load in the indoor units 2a and 2b. The heating main operation includes a heating only operation in which all of the indoor units 2a and 2b perform a heating operation. Examples of the refrigerant flow switching device 14 include a four-way valve.

The outdoor heat exchanger 12 is a heat exchanger that operates as a condenser in the cooling main operation and operates as an evaporator in the heating main operation. The outdoor heat exchanger 12 exchanges heat between the refrigerant and outdoor air.

The outdoor fan 13 is configured to provide the outdoor air to the outdoor heat exchanger 12. Examples of the outdoor fan 13 include a propeller fan that is driven by a motor (not illustrated). As the outdoor fan 13 operates, the outdoor air is suctioned into the outdoor unit 1, passes through the outdoor heat exchanger 12, and is then discharged out of the outdoor unit 1. The operation of the outdoor fan 13 is controlled by the controller 3.

The high-pressure-side pressure sensor 15 is provided to a discharge pipe between the compressor 11 and the refrigerant flow switching device 14, or on a discharge side of the compressor 11, in the refrigeration cycle circuit 10. The high-pressure-side pressure sensor 15 is configured to measure a high-pressure-side pressure $Pd$, which is a discharge pressure of the compressor 11, on a high-pressure side of the refrigeration cycle circuit 10 and output a measurement signal to the controller 3. The controller 3 calculates a condensing temperature $Tc$ of the refrigerant in the refrigeration cycle circuit 10 on the basis of the high-pressure-side pressure $Pd$ in the refrigeration cycle circuit 10.

The low-pressure-side pressure sensor 16 is provided to a suction pipe between the refrigerant flow switching device 14 and the compressor 11, or on a suction side of the compressor 11, in the refrigeration cycle circuit 10. The low-pressure-side pressure sensor 16 is configured to measure a low-pressure-side pressure $Ps$ on a low-pressure side of the refrigeration cycle circuit 10 and output a measurement signal to the controller 3. The controller 3 calculates an evaporating temperature $Te$ of the refrigerant in the refrigeration cycle circuit 10 on the basis of the low-pressure-side pressure $Ps$ in the refrigeration cycle circuit 10.

The indoor unit 2a is installed inside the building, for example. The indoor unit 2a holds the electronic expansion valve 21a and the indoor heat exchanger 22a, which are described above. The indoor unit 2a further holds an indoor fan 25a, a first temperature sensor TH1a, a second temperature sensor TH2a, and a third temperature sensor TH3a.

The electronic expansion valve 21a is a valve configured to cause adiabatic expansion of the refrigerant. The controller 3 controls the opening degree of the electronic expansion valve 21a such that the degree of superheat SH or the degree of subcooling SC of the refrigerant in the refrigeration cycle circuit 10 approaches a target value. The electronic expansion valve 21a is an example of an expansion device. Any device other than the electronic expansion valve may be used as long as the opening degree of the device is adjustable in accordance with control.

The indoor heat exchanger 22a is a heat exchanger that operates as an evaporator when the indoor unit 2a performs the cooling operation and operates as a condenser when the indoor unit 2a performs the heating operation. The indoor heat exchanger 22a exchanges heat between the refrigerant and indoor air.

The indoor fan 25a is configured to provide the indoor air to the indoor heat exchanger 22a. As the indoor fan 25a, for example, either of a centrifugal fan and a cross-flow fan, each of which is driven by a motor (not illustrated), is used in many cases. As the indoor fan 25a operates, the indoor air is suctioned into the indoor unit 2a and passes through the indoor heat exchanger 22a, and conditioned air leaving the indoor heat exchanger 22a is provided to a room. The operation of the indoor fan 25a is controlled by the controller 3.

The first temperature sensor TH1a is configured to measure a room temperature TH1 in the room to which conditioned air from the indoor unit 2a is provided and output a measurement signal including the measured temperature to the controller 3. The first temperature sensor TH1a is provided at, for example, an inlet of the indoor unit 2a, which is located upstream of the indoor heat exchanger 22a in a direction in which the indoor air flows.

The second temperature sensor TH2a is provided between the electronic expansion valve 21a and the indoor heat exchanger 22a in the refrigeration cycle circuit 10. The second temperature sensor TH2a is configured to measure a liquid-portion temperature TH2, which is a temperature of refrigerant at a liquid portion, through which liquid refrigerant flows, of the indoor heat exchanger 22a, and output a measurement signal including the measured temperature to the controller 3. Therefore, the second temperature sensor TH2a measures a temperature of refrigerant on a refrigerant inlet side of the indoor heat exchanger 22a in the cooling operation of the indoor unit 2a.

The third temperature sensor TH3a is provided between the indoor heat exchanger 22a and a combination of the low-pressure valve 45a and the high-pressure valve 46a in the refrigeration cycle circuit 10. The third temperature sensor TH3a is configured to measure a gas-portion temperature TH3, which is a temperature of refrigerant at a gas portion, through which gas refrigerant flows, of the indoor heat exchanger 22a, and output a measurement signal including the measured temperature to the controller 3. Therefore, the third temperature sensor TH3a measures a temperature of refrigerant on a refrigerant outlet side of the indoor heat exchanger 22a in the cooling operation of the indoor unit 2a.

The indoor unit 2b has the same configuration as that of the indoor unit 2a. The indoor unit 2b holds the electronic expansion valve 21b, the indoor heat exchanger 22b, an indoor fan 25b, a first temperature sensor TH1b, a second temperature sensor TH2b, and a third temperature sensor TH3b.

The flow dividing controller 4 is installed inside the building, for example. The flow dividing controller 4 is a relay unit provided between the outdoor unit 1 and each of the indoor units 2a and 2b in the refrigerant flow direction. The flow dividing controller 4 holds the first junction portion 41, the second junction portions 42a and 42b, the gas-liquid separator 43, the bypass passage 44, the branch passages 44a and 44b, the low-pressure valves 45a and 45b, and the high-pressure valves 46a and 46b, which are described above, and a valve 47 and a low-pressure bypass passage 48.

The valve 47 is opened and closed to control flow of the refrigerant. For example, in the cooling only operation, the valve 47 is opened to cause liquid refrigerant to flow from the outdoor unit 1 to the indoor units 2a and 2b. For example, while the valve 47 is closed, gas refrigerant flowing from the outdoor unit 1 into the flow dividing controller 4 is provided to the indoor unit 2, which is at least one of the indoor units 2a and 2b, performing the heating operation through the gas-liquid separator 43 and the bypass passage 44. Liquid refrigerant leaving the indoor unit 2 passes through the low-pressure bypass passage 48, which is used as a bypass pipe, for example.

Each of the low-pressure valves 45a and 45b and the high-pressure valves 46a and 46b is an on-off valve configured to open and close a passage. Examples of the low-pressure valves 45a and 45b and the high-pressure valves 46a and 46b include a solenoid valve and a motor-operated valve. The operations of the low-pressure valves 45a and 45b and the high-pressure valves 46a and 46b are controlled by the controller 3. While the indoor unit 2a is performing the cooling operation, the low-pressure valve 45a is opened, and the high-pressure valve 46a is closed. While the indoor unit 2a is performing the heating operation, the low-pressure valve 45a is closed, and the high-pressure valve 46a is opened. Similarly, while the indoor unit 2b is performing the cooling operation, the low-pressure valve 45b is opened, and the high-pressure valve 46b is closed. While the indoor unit 2b is performing the heating operation, the low-pressure valve 45b is closed, and the high-pressure valve 46b is opened.

The controller 3 includes a microcomputer including a central processing unit (CPU), a read-only memory (ROM), a random-access memory (RAM), and an input-output port. The controller 3 controls an operation of the entire refrigeration cycle apparatus in accordance with, for example, measurement signals from the various sensors provided in, for example, the refrigeration cycle circuit 10, and an operation signal from an operation unit (not illustrated). The controller 3 controls the devices, such as the compressor 11, the refrigerant flow switching device 14, the outdoor fan 13, the electronic expansion valves 21a and 21b, the indoor fans 25a and 25b, the low-pressure valves 45a and 45b, and the high-pressure valves 46a and 46b. Although the controller 3 is provided in the outdoor unit 1 in Embodiment 1 as illustrated in Fig. 1, the controller 3 may be disposed in any place. For example, the controller 3 may be provided in either the indoor unit 2a or the indoor unit 2b, or may be provided in the flow dividing controller 4. The controller 3 may be disposed independently.

The controller 3 in Embodiment 1 performs an abnormality determination process for detection of an abnormality, particularly at the electronic expansion valves 21a and 21b and the high-pressure valves 46a and 46b. For this purpose, the controller 3 includes, as functional blocks, a storage unit 31, an extraction unit 32, a calculation unit 33, a comparison unit 34, and a determination unit 35. The storage unit 31 stores data on pressures measured by the high-pressure-side pressure sensor 15 and the low-pressure-side pressure sensor 16. Furthermore, the storage unit 31 stores data on temperatures measured by the first temperature sensors TH1a and TH1b, the second temperature sensors TH2a and TH2b, and the third temperature sensors TH3a and TH3b. The data is periodically obtained during operation of the refrigeration cycle circuit 10. Additionally, the storage unit 31 stores various pieces of data that are necessary for the controller 3 to perform the abnormality determination process.

The extraction unit 32 extracts data necessary for the abnormality determination process from the data stored in the storage unit 31. For example, data obtained while the refrigeration cycle circuit 10 and the indoor unit 2a are operating in a specific operation status is used to detect an abnormality at the electronic expansion valve 21a and the high-pressure valve 46a for the indoor unit 2a. The specific operation status for detection of an abnormality at the electronic expansion valve 21a and the high-pressure valve 46a is an operation status in which while the compressor 11 is operating, the indoor unit 2a is in a thermo-off or stopped state, the electronic expansion valve 21a is fully closed, the low-pressure valve 45a is opened, and the high-pressure valve 46a is closed. For example, while the indoor unit 2a is in the thermo-off state in the cooling operation, the refrigeration cycle circuit 10 and the indoor unit 2a are operating in the specific operation status. At this time, either the cooling operation or the heating main operation may be performed in the refrigeration cycle circuit 10.

Similarly, data obtained while the refrigeration cycle circuit 10 and the indoor unit 2b are operating in a specific operation status is used to detect an abnormality at the electronic expansion valve 21b and the high-pressure valve 46b for the indoor unit 2b. The specific operation status for detection of an abnormality at the electronic expansion valve 21b and the high-pressure valve 46b is an operation status in which while the compressor 11 is operating, the indoor unit 2b is in the thermo-off or stopped state, the electronic expansion valve 21b is fully closed, the low-pressure valve 45b is opened, and the high-pressure valve 46b is closed. For example, while the indoor unit 2b is in the thermo-off state in the cooling operation, the refrigeration cycle circuit 10 and the indoor unit 2b are operating in the specific operation status. At this time, either the cooling operation or the heating main operation may be performed in the refrigeration cycle circuit 10. In Embodiment 1, as will be described later, the extraction unit 32 extracts data obtained in a specific operation that is performed in response to switching to an abnormality detection mode in an operation mode switching unit 37.

The calculation unit 33 performs necessary calculation on the basis of the data extracted by the extraction unit 32. The comparison unit 34 compares a value calculated by the calculation unit 33 with a threshold or compares values calculated by the calculation unit 33 with each other.

The determination unit 35 performs, on the basis of a result of comparison by the comparison unit 34, the abnormality determination process for at least one of the electronic expansion valves 21a and 21b, the low-pressure valves 45a and 45b, and the high-pressure valves 46a and 46b.

Furthermore, a notification unit 36 and the operation mode switching unit 37 are connected to the controller 3. The notification unit 36 and the operation mode switching unit 37 may be included, as parts of the controller 3, in the controller 3. The notification unit 36 is configured to provide notification of various pieces of information on, for example, abnormalities at the electronic expansion valves 21a and 21b and the high-pressure valves 46a and 46b, in response to an instruction from the controller 3. The notification unit 36 includes at least one of a display unit configured to visually provide notification of information and an audio output unit configured to audibly provide notification of information.

The operation mode switching unit 37 is configured to receive an operation-mode switching operation performed by a user and transmit a signal related to the operation to the controller 3. When an operation-mode switching operation is performed on the operation mode switching unit 37, the controller 3 switches between operation modes in response to a signal output from the operation mode switching unit 37. Operation modes of the refrigeration cycle apparatus according to Embodiment 1 include a normal operation mode and the abnormality detection mode. In the normal operation mode, the refrigeration cycle apparatus operates in an operation status in accordance with requests from the indoor units 2a and 2b. For example, the cooling only operation is performed in response to cooling requests from all of the indoor units 2a and 2b.

The abnormality detection mode is a mode to detect an abnormality at the electronic expansion valves 21a and 21b and the high-pressure valves 46a and 46b.

In the abnormality detection mode, therefore, the indoor unit 2a or the indoor unit 2b is caused to enter the thermo-off state in the cooling operation irrespective of requests from the indoor units 2a and 2b. If the normal operation mode is being executed, an abnormality at the electronic expansion valve 21a and the high-pressure valve 46a can be detected as long as the indoor unit 2a is in the thermo-off state in the cooling operation. Furthermore, if the normal operation mode is being executed, an abnormality at the electronic expansion valve 21b and the high-pressure valve 46b can be detected as long as the indoor unit 2b is in the thermo-off state in the cooling operation.

The cooling main operation will be described below as an example of an operation of the refrigeration cycle apparatus. For the cooling main operation, the refrigerant flow switching device 14 is switched to set the passages represented by the solid lines in Fig. 1. The cooling operation in which the indoor unit 2a is in the thermo-off or stopped state while the indoor unit 2b is performing the cooling operation will be described as an example. In the thermo-off state of the indoor unit 2a, the indoor fan 25a is driven, but the refrigeration cycle is in the same state as that while the indoor unit 2a is being stopped. Therefore, the refrigerant does not flow through the indoor unit 2a. For the valves connected to the indoor unit 2a in this state, the low-pressure valve 45a is opened, the high-pressure valve 46a is closed, and the electronic expansion valve 21a is fully closed. For the valves connected to the indoor unit 2b performing the cooling operation, the low-pressure valve 45b is opened, and the high-pressure valve 46b is closed. The opening degree of the electronic expansion valve 21b is controlled such that the degree of superheat SH at the outlet of the indoor heat exchanger 22a approaches a target degree of superheat SHm. For the low-pressure valves 45a and 45b, the high-pressure valves 46a and 46b, and the electronic expansion valves 21a and 21b in Fig. 1 and Figs. 3, 5, and 7, which will be described later, the opened valves are represented by open symbols, and the closed valves are represented by filled symbols.

High-temperature and high-pressure gas refrigerant discharged from the compressor 11 passes through the refrigerant flow switching device 14 and enters the outdoor heat exchanger 12. Once in the outdoor heat exchanger 12, the gas refrigerant exchanges heat with the outdoor air provided by the outdoor fan 13 and thus condenses into high-pressure liquid refrigerant. The high-pressure liquid refrigerant leaving the outdoor heat exchanger 12 passes through the check valve 171, the gas-liquid separator 43, the valve 47, and the electronic expansion valve 21b and enters the indoor heat exchanger 22b. In the cooling main operation, the indoor heat exchanger 22b and the indoor heat exchanger 22b operate as an evaporator.

Once in the indoor heat exchanger 22b, the liquid refrigerant exchanges heat with the indoor air provided by the indoor fan 25b and thus evaporates into low-pressure gas refrigerant. The refrigerant that has condensed in the indoor heat exchanger 22b passes through the low-pressure valve 45b, the check valve 174, and the refrigerant flow switching device 14, and is then suctioned into the compressor 11.

Low-pressure-side pressure constant control, which is executed by the controller 3, will be described below. Such a variable refrigerant flow system in Embodiment 1 needs to cause multiple indoor units, namely the indoor units 2a and 2b, to perform the cooling operation without lacking in capacity. The operating frequency of the compressor 11 is controlled such that a suction pressure of the compressor 11, which is the low-pressure-side pressure Ps in the refrigeration cycle circuit 10, is constant.

Furthermore, outdoor fan control, which is executed by the controller 3, will be described below. In the cooling main operation, the controller 3 controls the rotation frequency of the outdoor fan 13 such that the difference between the condensing temperature Tc and an outdoor air temperature is constant.

For steady-state control in the cooling operation in the indoor units 2a and 2b, this control in the indoor unit 2b will be described as an example. In the refrigeration cycle circuit 10, the low-pressure-side pressure Ps is controlled such that the low-pressure-side pressure Ps is constant. For this purpose, degree-of-superheat control is exercised as a way of changing the air-conditioning capacity of the indoor unit 2b. In the degree-of-superheat control, the target degree of superheat SHm for the degree of superheat SH at an outlet of the indoor heat exchanger 22b is adjusted such that the indoor unit 2b has a desired air-conditioning capacity. The amount of heat exchange in the indoor heat exchanger 22b changes depending on the magnitude of the degree of superheat SH. Therefore, adjusting the target degree of superheat SHm for the degree of superheat SH allows the indoor unit 2b to demonstrate an appropriate air-conditioning capacity. When a temperature difference between a preset temperature in the indoor unit 2b and the room temperature TH1 is large, the target degree of superheat SHm for the degree of superheat SH is set to a small value. When the temperature difference between the preset temperature in the indoor unit 2b and the room temperature TH1 is small, the target degree of superheat SHm for the degree of superheat SH is set to a large value. The opening degree of the electronic expansion valve 21b is controlled such that the degree of superheat SH at the outlet of the indoor heat exchanger 22b approaches the target degree of superheat SHm. Thus, a necessary amount of refrigerant is provided to the indoor heat exchanger 22b.

An abnormality at the electronic expansion valves 21 and the high-pressure valves 46 in the refrigeration cycle apparatus according to Embodiment 1 will be described below. An example will be described below using the electronic expansion valve 21a, the indoor heat exchanger 22a, the first temperature sensor TH1a, the second temperature sensor TH2a, the third temperature sensor TH3a, the low-pressure valve 45a, and the high-pressure valve 46a for the indoor unit 2a in the stopped state in the specific operation status.

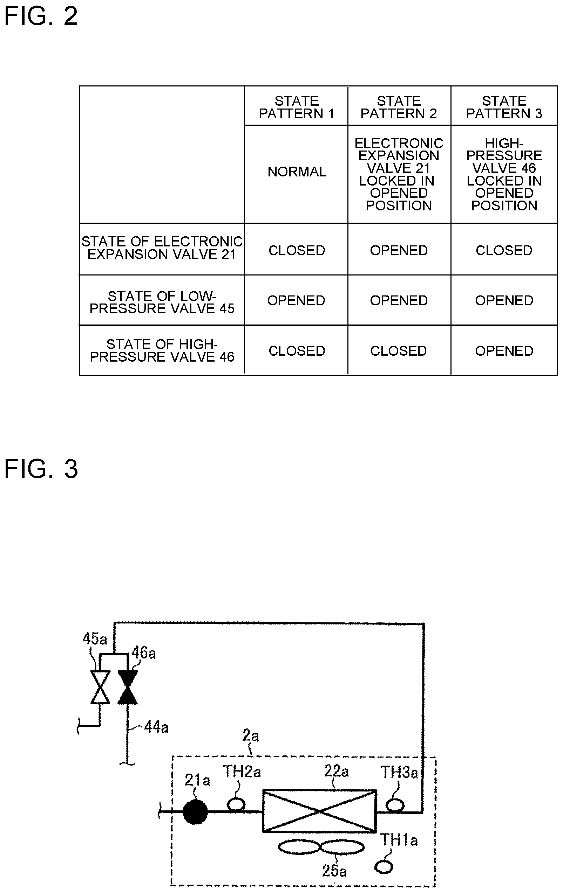

Fig. 2 is a diagram illustrating exemplary patterns of combinations of states into which the electronic expansion valve 21a, the low-pressure valve 45a, and the high-pressure valve 46a may be brought in the refrigeration cycle apparatus according to Embodiment 1. Herein the refrigeration cycle apparatus is specified to be controlled such that the refrigeration cycle apparatus is in the above-described specific operation status. Therefore, the indoor unit 2a is in the thermo-off or stopped state. In this case, either the cooling main operation or the heating main operation may be performed in the refrigeration cycle circuit 10.

Fig. 3 is a diagram illustrating operations of the electronic expansion valve 21a, the low-pressure valve 45a, and the high-pressure valve 46a in State Pattern 1 in the refrigeration cycle apparatus according to Embodiment 1. As illustrated in Figs. 2 and 3, each of the electronic expansion valve 21a, the low-pressure valve 45a, and the high-pressure valve 46a is in a normal state in State Pattern 1. The electronic expansion valve 21a is fully closed, the low-pressure valve 45a is opened, and the high-pressure valve 46a is closed.

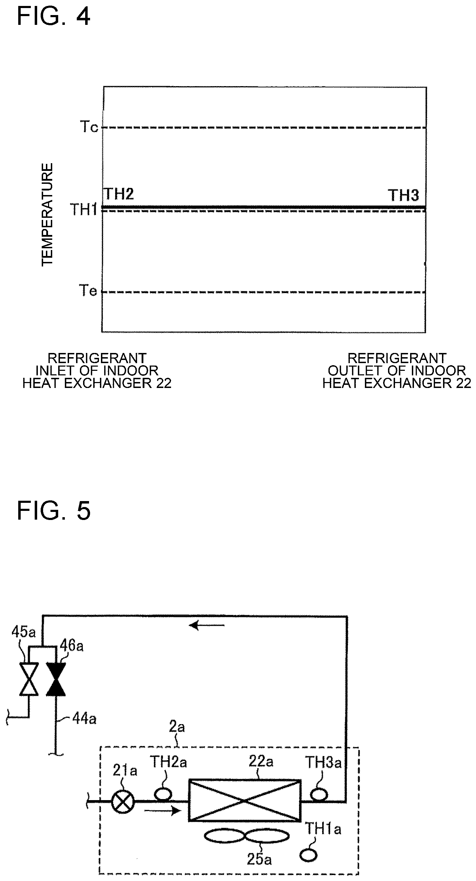

Fig. 4 is a diagram illustrating a graph showing a refrigerant temperature distribution in the indoor heat exchanger 22a in State Pattern 1 in the refrigeration cycle apparatus according to Embodiment 1. The horizontal axis of Fig. 4 represents a position in a refrigerant passage in the indoor heat exchanger 22a. The vertical axis of Fig. 4 represents a temperature. The right end of the graph represents the refrigerant inlet of the indoor heat exchanger 22a in the cooling operation. A temperature at the right end of the graph corresponds to the gas-portion temperature TH3, which is measured by the third temperature sensor TH3a, in the indoor heat exchanger 22a. The left end of the graph represents the refrigerant outlet of the indoor heat exchanger 22a in the cooling operation. A temperature at the left end of the graph corresponds to the liquid-portion temperature TH2, which is measured by the second temperature sensor TH2a, in the indoor heat exchanger 22a.

In State Pattern 1, which is a normal condition, the electronic expansion valve 21a is closed, and the refrigerant is not provided to the indoor heat exchanger 22a. In State Pattern 1, or the normal condition, therefore, as illustrated in Fig. 4, the liquid-portion temperature TH2 and the gas-portion temperature TH3 approach the room temperature TH1 (TH2 = TH3 =TH1).

Fig. 5 is a diagram illustrating operations of the electronic expansion valve 21a, the low-pressure valve 45a, and the high-pressure valve 46a in State Pattern 2 in the refrigeration cycle apparatus according to Embodiment 1. As illustrated in Figs. 2 and 5, State Pattern 2 is a condition where the electronic expansion valve 21a is locked in opened position. The electronic expansion valve 21a being locked in opened position is one of abnormalities at the electronic expansion valve 21a. Sticking of a valve body in the electronic expansion valve 21a causes the electronic expansion valve 21a to be locked in opened position. The electronic expansion valve 21a is fully closed in State Pattern 1, which is the normal condition, whereas the electronic expansion valve 21a is kept opened in State Pattern 2.

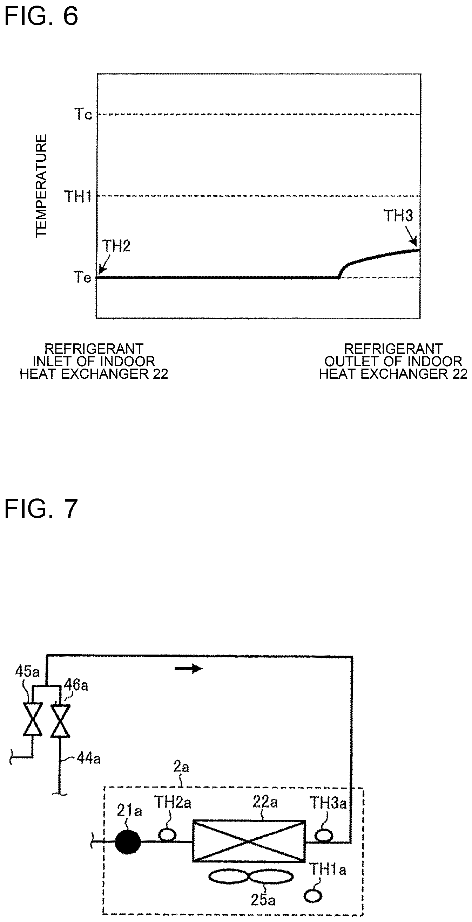

Fig. 6 is a diagram illustrating a graph showing a refrigerant temperature distribution in the indoor heat exchanger 22a in State Pattern 2 in the refrigeration cycle apparatus according to Embodiment 1. The horizontal and vertical axes of Fig. 6 are the same as those of Fig. 4.

In State Pattern 1, which is the normal condition, the refrigerant is superheated gas at a portion where TH3 is disposed. When the electronic expansion valve 21a is locked in opened position to cause the condition to shift to State Pattern 2, the refrigerant flows through the indoor heat exchanger 22a. Consequently, two-phase refrigerant passing through the indoor heat exchanger 22a evaporates by exchanging heat with the indoor air. Thus, as illustrated in Fig. 6, the liquid-portion temperature TH2 is equal to the evaporating temperature. In the vicinity of the outlet of the indoor heat exchanger 22a, the refrigerant is superheated. Accordingly, the gas-portion temperature TH3 higher than the evaporating temperature is measured. As described above, in State Pattern 2, the liquid-portion temperature TH2 is equal to the evaporating temperature Te, and the gas-portion temperature TH3 differs from the liquid-portion temperature TH2 (Te = TH2 < TH3).

Fig. 7 is a diagram illustrating operations of the electronic expansion valve 21a, the low-pressure valve 45a, and the high-pressure valve 46a in State Pattern 3 in the refrigeration cycle apparatus according to Embodiment 1. As illustrated in Figs. 2 and 7, State Pattern 3 is a condition where the high-pressure valve 46a is locked in opened position. The high-pressure valve 46a being locked in opened position is one of abnormalities at the high-pressure valve 46a. Sticking of a valve body in the high-pressure valve 46a causes the high-pressure valve 46a to be locked in opened position. The high-pressure valve 46a is closed in State Pattern 1, which is the normal condition, whereas the high-pressure valve 46a is opened in State Pattern 3. If the high-pressure valve 46a is locked in opened position when the heating operation is switched to the cooling operation in the refrigeration cycle apparatus, the high-pressure valve 46a will fail to be closed. This results in State Pattern 3, rather than State Pattern 1.

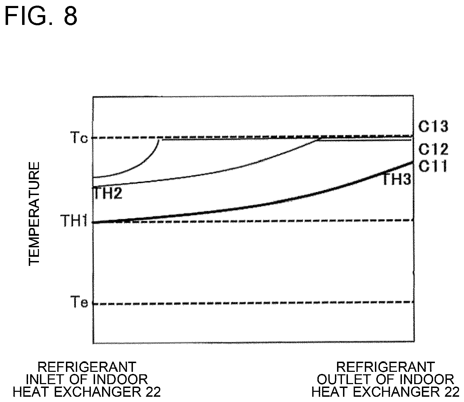

Fig. 8 is a diagram illustrating graphs each showing a refrigerant temperature distribution in the indoor heat exchanger 22a in State Pattern 3 in the refrigeration cycle apparatus according to Embodiment 1. The horizontal and vertical axes of Fig. 8 are the same as those of Fig. 4. A thick solid curve C11 represents a refrigerant temperature distribution obtained after a lapse of sufficient time since transition from State Pattern 1 to State Pattern 3. A thin solid curve C131 represents a refrigerant temperature distribution obtained just after the transition from State Pattern 1 to State Pattern 3. A thin solid curve C12 represents a time-based change in refrigerant temperature distribution from the temperature distribution represented by the curve C11 to the temperature distribution represented by the curve C13.

In State Pattern 1, which is the normal condition, the gas-portion temperature TH3 is equal to the room temperature TH1. While the high-pressure valve 46a is locked in opened position as in State Pattern 3, high-temperature refrigerant flows into the indoor heat exchanger 22a and condenses. The refrigerant accumulates in the indoor heat exchanger 22a. Consequently, gas refrigerant in the indoor heat exchanger 22a liquifies by exchanging heat with the indoor air, so that the indoor heat exchanger 22a is gradually filled with two-phase refrigerant. Thus, as illustrated in Fig. 8, the gas-portion temperature TH3 and the liquid-portion temperature TH2 change away from the room temperature TH1 and approach the condensing temperature Tc. Such a temperature difference changes depending on the cooling performance of the indoor heat exchanger 22.

As the high-pressure valve 46a is opened in State Pattern 3, part of the high-pressure refrigerant passes through the bypass passage 44 and the branch passage 44a and enters the low-pressure side of the refrigeration cycle circuit 10. This results in an increase in low-pressure-side pressure Ps in the refrigeration cycle circuit 10. The compressor 11 is controlled such that the high-pressure-side pressure Pd approaches a constant target high-pressure-side pressure Pdm. The operating frequency of the compressor 11 increases as the low-pressure-side pressure Ps increases. Therefore, the amount of refrigerant passing through the compressor 11 increases by the amount of refrigerant flowing through the bypass passage 44. If the high-pressure-side pressure Pd in the refrigeration cycle circuit 10 can be maintained at the target high-pressure-side pressure Pdm by increasing the operating frequency of the compressor 11, the operating efficiency of the refrigeration cycle apparatus will decrease, but the indoor unit 2b can operate as in State Pattern 1, which is the normal condition. However, the compressor 11 has a set range of operating frequencies, and the operating frequency of the compressor 11 cannot be set above a maximum operating frequency, which is an upper limit of the range of operating frequencies. Therefore, if the high-pressure-side pressure Pd in the refrigeration cycle circuit 10 cannot be maintained at the target high-pressure-side pressure Pdm by increasing the operating frequency of the compressor 11 up to the maximum operating frequency, the capacity of the indoor unit 2b will be reduced because of an increase in low-pressure-side pressure Ps in the refrigeration cycle circuit 10.

In State Pattern 3, part of the refrigerant discharged from the compressor 11 bypasses the indoor units 2a and 2b and is suctioned into the compressor 11 without being provided to the indoor units 2a and 2b. Therefore, whether the condition is State Pattern 3 can be determined by comparing a refrigerant flow rate through the compressor 11 with the sum of refrigerant flow rates through the electronic expansion valves 21a and 21b for all of the indoor units 2a and 2b.

A refrigerant flow rate Groc through the compressor 11 can be calculated using, for example, the operating frequency of the compressor 11 and the density of refrigerant to be suctioned into the compressor 11. The following Equation (1) is an exemplary formula of the refrigerant flow rate Groc through the compressor 11. In Equation (1), Groc is the refrigerant flow rate [kg/h] through the compressor 11, Vst is the displacement [$m^3$] of the compressor 11, F is the operating frequency [Hz] (= [1/S]) of the compressor 11, ps is the density [$kg/m^3$] of refrigerant to be suctioned into the compressor 11, and ηv is the volumetric efficiency of the compressor 11 and is a constant value that satisfies $0 \leq \eta v \leq 1$.

[Math. 1]

$$Groc = Vst \times F \times \rho s \times \eta v \times 3600 \qquad ...(1)$$

The sum $\Sigma Gric$ of refrigerant flow rates through the electronic expansion valves 21a and 21b is the sum of refrigerant flow rates Gric through the electronic expansion valves 21a and 21b. For example, the refrigerant flow rate Gric through the electronic expansion valve 21a can be calculated using, for example, a pressure difference between the high-pressure-side pressure Pd and the low-pressure-side pressure Ps in the refrigeration cycle circuit 10 and a Cv value of the electronic expansion valve 21a. The following Equation (2) is an exemplary formula of the refrigerant flow rate Gric through the electronic expansion valve 21a. In this equation, Gric is the refrigerant flow rate [kg/h] through the electronic expansion valve 21a, Cv is the Cv value of the electronic expansion valve 21a, $\Delta P$ is the pressure difference [MPa (abs)] between the high-pressure-side pressure Pd and the low-pressure-side pressure Ps in the refrigeration cycle circuit 10, and pLEV is the density [kg/m$^3$] of refrigerant at an inlet of the electronic expansion valve 21a.
[Math. 2]

$$Gric = 86.4 \times Cv \times (\Delta P \times \rho LEV)^{1/2} \qquad ...(2)$$

The above Equation (2) is obtained by multiplying Equation (3), which is a relational expression representing the relationship between the flow rate of fluid and the Cv value, by the density p, and is a transformation of the following Equation (3). In this equation, the Cv value is one of capacity coefficients of valves, for example. According to the Japanese Industrial Standards (JIS), the Cv value is defined as a numerical value representing the flow rate in US gallons per minute of clear water at 60 degrees F that flows through a valve with a pressure difference of 1 [pound-force per square inch (psi)] over a specific travel distance (operating range). QL [m$^3$/h] (h is hour) is the flow rate of liquid. Furthermore, $\Delta P$ [MPa (abs)] is the difference between a primary (inlet) absolute pressure P1 and a secondary (outlet) absolute pressure P2. GL is the specific gravity of liquid when the specific gravity of water is 1, and is expressed as GL = p(ref)p(water), where p(ref) [kg/m$^3$] is a refrigerant density and p(water) [kg/m$^3$] is a water density = approximately 1000 [kg/m$^3$].
[Math. 3]

$$QL = Cv/\{0.366 \times (GL/\Delta P)^{1/2}\} \qquad ...(3)$$

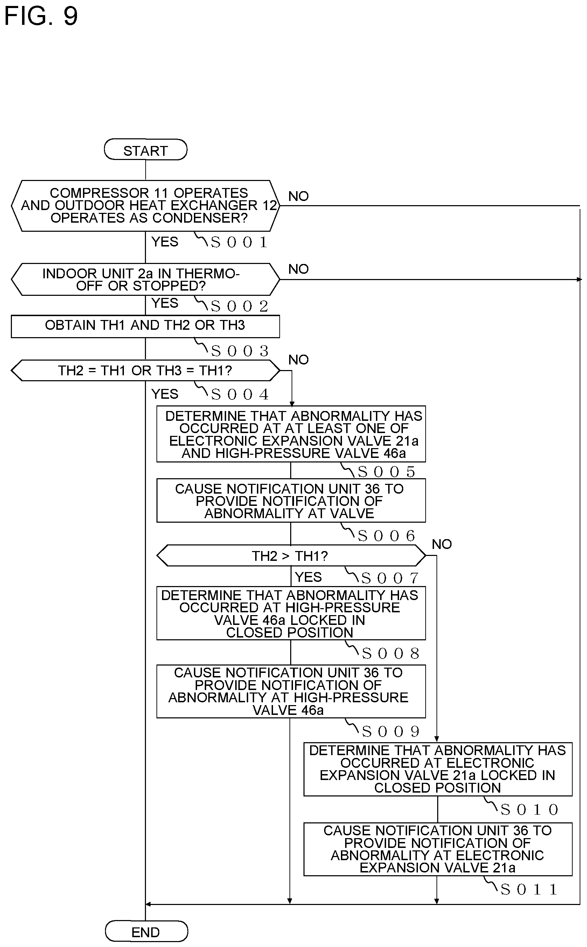

When the refrigerant flow rate Groc through the compressor 11 is larger than the sum $\Sigma Gric$ of the refrigerant flow rates through the electronic expansion valves 21a and 21b (Groc > $\Sigma Gric$), it can be determined that the condition is State Pattern 3. If the refrigerant discharged from the compressor 11 is provided only to one indoor unit 2 as in Embodiment 1, whether the condition is State Pattern 3 can be determined using the refrigerant flow rate Groc through the compressor 11 and the refrigerant flow rate Gric through the electronic expansion valve 21. In other words, when the refrigerant flow rate Groc through the compressor 11 is larger than the refrigerant flow rate Gric through the electronic expansion valve 21b (Groc > Gric), it can be determined that the condition is State Pattern 3.
Furthermore, when a value obtained by subtracting a target low-pressure-side pressure Psm from the low-pressure-side pressure Ps in the refrigeration cycle circuit 10 is larger than a threshold, it can be determined that the condition is State Pattern 3. Alternatively, when the value obtained by subtracting the target low-pressure-side pressure Psm from the low-pressure-side pressure Ps in the refrigeration cycle circuit 10 is larger than the threshold, and when the compressor 11 operates at the maximum operating frequency, it can be determined that the condition is State Pattern 3. The threshold is set to, for example, a value larger than the absolute value of a tolerance for the high-pressure-side pressure Pd that is allowable in high-pressure-side pressure constant control.
State Pattern 2 and State Pattern 3 will be described together. In each of State Pattern 2 and State Pattern 3, the gas-portion temperature TH3 or the liquid-portion temperature TH2 differs from the room temperature TH1. Therefore, when the gas-portion temperature TH3 or the liquid-portion temperature TH2 differs from the room temperature TH1, it can be determined that the condition is State Pattern 2 or State Pattern 3.
Furthermore, when the gas-portion temperature TH3 or the liquid-portion temperature TH2 is higher than the room temperature TH1, it can be determined that an abnormality has occurred at the high-pressure valve 46a locked in opened position. When the gas-portion temperature TH3 or the liquid-portion temperature TH2 is lower than the room temperature TH1, it can be determined that an abnormality has occurred at the electronic expansion valve 21a locked in opened position. At this time, the notification unit 36 may provide notification of an abnormality at either the electronic expansion valve 21a or the high-pressure valve 46a.
An abnormality determination process, which is performed by the controller 3, for detection of an abnormality at at least one of the low-pressure valve 45a, the high-pressure valve 46a, and the electronic expansion valve 21a will be described below. The controller 3 repeatedly performs at least one of abnormality determination processes illustrated in Figs. 9 to 11 at set time intervals. Herein the controller 3 is specified to perform an abnormality determination process for detection of an abnormality at the high-pressure valve 46a or the electronic expansion valve 21a. An abnormality determination process for detection of an abnormality at the high-pressure valve 46b or the electronic expansion valve 21b can also be performed in a similar manner.

Fig. 9 is a diagram illustrating a flowchart of an exemplary procedure of a first abnormality detection process, which is performed by the controller 3 of the refrigeration cycle apparatus according to Embodiment 1. In the first abnormality detection process, the controller 3 performs an abnormality determination process for detection of an abnormality at the high-pressure valve 46a and the electronic expansion valve 21a. In the flowchart of Fig. 9, the controller 3 performs, as a single procedure, the abnormality determination process for the high-pressure valve 46a and the electronic expansion valve 21a. An abnormality detection process for the high-pressure valve 46a and an abnormality detection process for the electronic expansion valve 21a may be performed as different procedures.

In step S001, the controller 3 determines whether the compressor 11 operates and the outdoor heat exchanger 12 operates as a condenser in accordance with a designated operation mode. When the outdoor heat exchanger 12 operates as a condenser, it means that the refrigeration cycle apparatus is performing the cooling operation. If the controller 3 determines that the compressor 11 operates and the outdoor heat exchanger 12 operates as a condenser, the process proceeds to step S002; otherwise the first abnormality detection process is terminated.

In step S002, the controller 3 determines whether the indoor unit 2a is in the thermo-off state in the cooling operation or stopped. This determination can be restated to a determination as to whether the refrigeration cycle apparatus is in an operation status in which the electronic expansion valve 21a is closed, the low-pressure valve 45a is opened, and the high-pressure valve 46a is closed. If the controller 3 determines that the indoor unit 2a is in the thermo-off state in the cooling operation or stopped, the process proceeds to step S003; otherwise the first abnormality detection process is terminated.

In step S003, data on the room temperature TH1 and data on the liquid-portion temperature TH2 or the gas-portion temperature TH3 are obtained. For the liquid-portion temperature TH2 and the gas-portion temperature TH3, data on either one of the temperatures may be obtained. Data on both the temperatures may be obtained. The data on the room temperature TH1 is obtained on the basis of a measurement signal from the first temperature sensor TH1a. The data on the liquid-portion temperature TH2 is obtained on the basis of a measurement signal from the second temperature sensor TH2a. The data on the gas-portion temperature TH3 is obtained on the basis of a measurement signal from the third temperature sensor TH3a.

Then, in step S004, the controller 3 determines whether the gas-portion temperature TH3 is equal to the room temperature TH1 and determines whether the liquid-portion temperature TH2 is equal to the room temperature TH1. The gas-portion temperature TH3 equal to the room temperature TH1 and the liquid-portion temperature TH2 equal to the room temperature TH1 indicate that there is no temperature difference. For a determination as to whether there is no temperature difference, the temperature difference does not need to be zero and may have a margin of error. If the controller 3 determines at least one of that the gas-portion temperature TH3 is not equal to the room temperature TH1 and that the liquid-portion temperature TH2 is not equal to the room temperature TH1, the process proceeds to step S005. If the controller 3 determines that either the gas-portion temperature TH3 or the liquid-portion temperature TH2 is equal to the room temperature TH1, the controller 3 terminates the first abnormality detection process. Although the controller 3 determines in this step whether the gas-portion temperature TH3 is equal to the room temperature TH1, it is more efficient to determine whether the liquid-portion temperature TH2 is equal to the room temperature TH1 because the controller 3 compares the liquid-portion temperature TH2 with the room temperature TH1 in step S007, which will be described later.

In step S005, the controller 3 determines that an abnormality has occurred at either the electronic expansion valve 21a or the high-pressure valve 46a. The reason is that when the gas-portion temperature TH3 is not equal to the room temperature TH1 or when the liquid-portion temperature TH2 is not equal to the room temperature TH1, the condition corresponds to State Pattern 2 or State Pattern 3, rather than the above-described State Pattern 1, which is the normal condition.

Then, in step S006, the controller 3 performs an operation of causing the notification unit 36 to provide notification of the abnormality at the electronic expansion valve 21a or the high-pressure valve 46a. For example, if operations in steps S007 to S011 are performed, the operations in steps S005 and S006 can be omitted. Furthermore, the controller 3 may terminate the process at step S006.

Then, in step S007, the controller 3 determines whether the liquid-portion temperature TH2 is higher than the room temperature TH1. If the controller 3 determines that the liquid-portion temperature TH2 is higher than the room temperature TH1, the process proceeds to step S008. If the controller 3 determines that the liquid-portion temperature TH2 is lower than the room temperature TH1, the process proceeds to step S010. The determination operation in step S007 may be performed after a lapse of time since the determination in step S004 exceeds a predetermined threshold time, or after the gas-portion temperature TH3 stabilizes. In the example described above, the liquid-portion temperature TH2 is compared with the room temperature TH1. The gas-portion temperature TH3 may be compared with the room temperature TH1. The operation using the gas-portion temperature TH3 is performed in a manner similar to that using the liquid-portion temperature TH2. If the controller 3 determines that the gas-portion temperature TH3 is higher than the room temperature TH1, the process proceeds to step S008. If the controller 3 determines that the gas-portion temperature TH3 is lower than the room temperature TH1, the process proceeds to step S010.

In step S008, the controller 3 determines that the abnormality has occurred at the high-pressure valve 46a locked in opened position. The reason is that when the liquid-portion temperature TH2 is higher than the room temperature TH1, the condition corresponds to State Pattern 3.

Then, in step S009, the controller 3 performs an operation of causing the notification unit 36 to provide notification of the abnormality at the high-pressure valve 46a. Then, the first abnormality detection process is terminated.

In step S010, the controller 3 determines that the abnormality has occurred at the electronic expansion valve 21a locked in opened position. The reason is that when the liquid-portion temperature TH2 is lower than the room temperature TH1, the condition corresponds to State Pattern 2.

Then, in step S011, the controller 3 performs an operation of causing the notification unit 36 to provide notification of the abnormality at the electronic expansion valve 21a. After that, the first abnormality detection process is terminated.

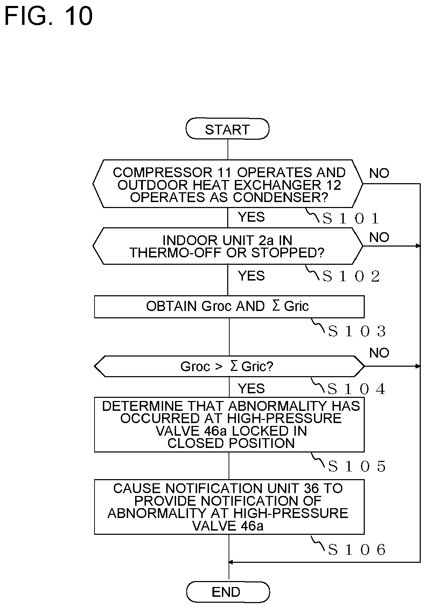

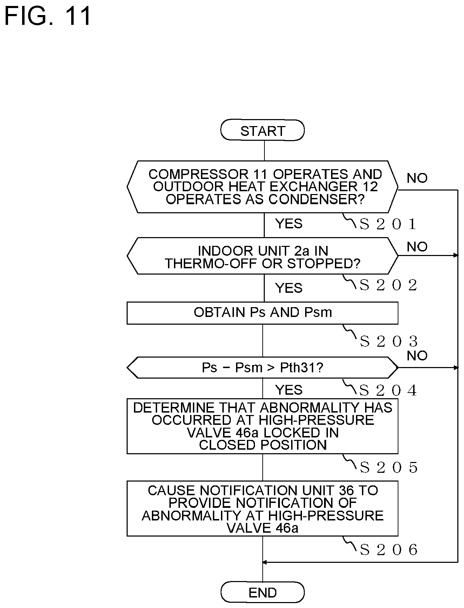

Fig. 10 is a diagram illustrating a flowchart of an exemplary procedure of a second abnormality detection process, which is performed by the controller 3 of the refrigeration cycle apparatus according to Embodiment 1. The second abnormality detection process is performed to detect an abnormality at the high-pressure valve 46a. The controller 3 may perform the first abnormality detection process described with reference to Fig. 9 and at least one of the second abnormality detection process of Fig. 10 and a third abnormality detection process, which will be described later, illustrated in Fig. 11.

In step S101, the controller 3 determines whether the compressor 11 operates and the outdoor heat exchanger 12 operates as a condenser. If the controller 3 determines that the compressor 11 operates and the outdoor heat exchanger 12 operates as a condenser, the process proceeds to step S102; otherwise the second abnormality detection process is terminated.

In step S102, the controller 3 determines whether the indoor unit 2a is in the thermo-off state in the cooling operation or stopped. This determination can be restated to a determination as to whether the refrigeration cycle apparatus is in the operation status in which the electronic expansion valve 21a is closed, the low-pressure valve 45a is opened, and the high-pressure valve 46a is closed. If the controller 3 determines that the indoor unit 2a is in the thermo-off state in the cooling operation or stopped, the process proceeds to step S103; otherwise the second abnormality detection process is terminated.

In step S103, the controller 3 obtains data on the refrigerant flow rate Groc through the compressor 11 and data on the sum ΣGric of the refrigerant flow rates through the electronic expansion valves 21a and 21b. The data on the refrigerant flow rate Groc in the outdoor unit 1 is obtained on the basis of, for example, Equation (1) described above. The data on the sum ΣGric of the refrigerant flow rates in the indoor unit 2b is obtained on the basis of, for example, Equation (2) described above.

Then, in step S104, the controller 3 determines whether the refrigerant flow rate Groc in the outdoor unit 1 is larger than the sum ΣGric of the refrigerant flow rates in the indoor unit 2b. If the controller 3 determines that the refrigerant flow rate Groc is larger than the sum ΣGric of the refrigerant flow rates, the process proceeds to step S105. If the controller 3 determines that the refrigerant flow rate Groc is equal to the sum ΣGric of the refrigerant flow rates, the controller 3 terminates the second abnormality detection process.

In step S105, the controller 3 determines that an abnormality has occurred at the high-pressure valve 46a. The reason is that when the refrigerant flow rate Groc in the outdoor unit 1 is larger than the sum ΣGric of the refrigerant flow rates in the indoor unit 2b, the condition corresponds to State Pattern 3.

Then, in step S106, the controller 3 performs an operation of causing the notification unit 36 to provide notification of the abnormality at the high-pressure valve 46a. After that, the second abnormality detection process is terminated.

Fig. 11 is a diagram illustrating a flowchart of an exemplary procedure of a third abnormality detection process, which is performed by the controller 3 of the refrigeration cycle apparatus according to Embodiment 1. The third abnormality detection process is performed to detect an abnormality at the high-pressure valve 46a.

In step S201, the controller 3 determines whether the compressor 11 operates and the outdoor heat exchanger 12 operates as a condenser. If the controller 3 determines that the compressor 11 operates and the outdoor heat exchanger 12 operates as a condenser, the process proceeds to step S202; otherwise the second abnormality detection process is terminated.

In step S202, the controller 3 determines whether the indoor unit 2a is in the thermo-off state in the cooling operation or stopped. This determination can be restated to a determination as to whether the refrigeration cycle apparatus is in the operation status in which the electronic expansion valve 21a is closed, the low-pressure valve 45a is opened, and the high-pressure valve 46a is closed. If the controller 3 determines that the indoor unit 2a is in the thermo-off state in the cooling operation or stopped, the process proceeds to step S203; otherwise the third abnormality detection process is terminated.

In step S203, the controller 3 obtains data on the low-pressure-side pressure Ps and data on the target low-pressure-side pressure Psm. The data on the low-pressure-side pressure Ps is obtained on the basis of a measurement signal from the low-pressure-side pressure sensor 16. The data on the target low-pressure-side pressure Psm is stored in the storage unit 31 in advance.

Then, in step S204, the controller 3 determines whether a value Ps - Psm obtained by subtracting the target low-pressure-side pressure Psm from the low-pressure-side pressure Ps is larger than a predetermined threshold pressure Pth31. If the controller 3 determines that the value obtained by subtracting the target low-pressure-side pressure Psm from the low-pressure-side pressure Ps is larger than the threshold pressure Pth31, the process proceeds to step S205. If the controller 3 determines that the value is less than or equal to the threshold pressure Pth31, the controller 3 terminates the third abnormality detection process.

In step S205, the controller 3 determines that an abnormality has occurred at the high-pressure valve 46a. The reason is that when the value obtained by subtracting the target low-pressure-side pressure Psm from the low-pressure-side pressure Ps is larger than the threshold pressure Pth31, the condition corresponds to State Pattern 3.

Then, in step S206, the controller 3 performs an operation of causing the notification unit 36 to provide notification of the abnormality at the high-pressure valve 46a. After that, the third abnormality detection process is terminated.

In the above-described step S204, the controller 3 may determine whether the value obtained by subtracting the target low-pressure-side pressure Psm from the low-pressure-side pressure Ps is larger than the threshold pressure Pth31 and whether the compressor 11 operates at the maximum operating frequency. If the controller 3 determines that the value obtained by subtracting the target low-pressure-side pressure Psm from the low-pressure-side pressure Ps is larger than the threshold pressure Pth31 and that the compressor 11 operates at the maximum operating frequency, the process proceeds to step S205; otherwise the third abnormality detection process is terminated.

As described above, the refrigeration cycle apparatus according to Embodiment 1 includes the refrigeration cycle circuit 10, the bypass passage 44, the low-pressure valve 45a, the high-pressure valve 46a, the first temperature sensor TH1a, the second temperature sensor TH2a, and the notification unit 36. The refrigeration cycle circuit 10 includes the compressor 11, the refrigerant flow switching device 14, the outdoor heat exchanger 12, the electronic expansion valve 21a, and the indoor heat exchanger 22a. In the refrigeration cycle circuit 10, the bypass passage 44 connects the first junction portion 41 provided between the outdoor heat exchanger 12 and the electronic expansion valve 21a to the second junction portion 42a provided between the indoor heat exchanger 22a and the refrigerant flow switching device 14. The low-pressure valve 45a is provided between the second junction portion 42a and the refrigerant flow switching device 14 in the refrigeration cycle circuit 10. In addition, the high-pressure valve 46a is provided to the bypass passage 44. The first temperature sensor TH1a is configured to measure the room temperature TH1, which is a temperature in a room to which air passing through the indoor heat exchanger 22a is provided. The second temperature sensor TH2a is configured to measure the liquid-portion temperature TH2, which is a temperature of refrigerant at a liquid portion of the indoor heat exchanger 22a. The third temperature sensor TH3a is configured to measure the gas-portion temperature TH3, which is a temperature of refrigerant at a gas portion of the indoor heat exchanger 22a. The notification unit 36 is configured to provide notification of an abnormality. The refrigeration cycle apparatus performs an operation in the operation status in which the indoor unit 2a is in the thermo-off state in the cooling operation or stopped, or in which the compressor 11 operates, the indoor heat exchanger 22b operates as an evaporator, the electronic expansion valve 21a connected to the indoor heat exchanger 22a is fully closed, the low-pressure valve 45a is opened, and the high-pressure valve 46a is closed. In this operation status, when the controller 3 determines at least one of that the gas-portion temperature TH3 is not equal to the room temperature TH1 and that the liquid-portion temperature TH2 is not equal to the room temperature TH1, the notification unit 36 provides notification of an abnormality at the electronic expansion valve 21a or the high-pressure valve 46a. The high-pressure valve 46a is an example of a second valve. The low-pressure valve 45a is an example of a first valve. The electronic expansion valve 21a is an example of an expansion device.

The above-described configuration of the refrigeration cycle apparatus according to Embodiment 1 enables more accurate and earlier detection of an abnormality at the electronic expansion valve 21a or the high-pressure valve 46a. As the refrigeration cycle apparatus according to Embodiment 1 can provide earlier notification of an abnormality at the electronic expansion valve 21a or the high-pressure valve 46a, the electronic expansion valve 21a or the high-pressure valve 46a can be returned to a normal state earlier. Therefore, the refrigeration cycle apparatus according to Embodiment 1 can reduce a duration in which the indoor unit 2a is in poor condition.

In the refrigeration cycle apparatus according to Embodiment 1, when the controller 3 determines, in the above-described operation status, that the liquid-portion temperature TH2 is lower than the room temperature TH1, the notification unit 36 can provide notification of an abnormality at the electronic expansion valve 21a.

In the refrigeration cycle apparatus according to Embodiment 1, when the controller 3 determines, in the above-described operation status, that the liquid-portion temperature TH2 is higher than the room temperature TH1, the notification unit 36 can provide notification of an abnormality at the high-pressure valve 46a.

In the refrigeration cycle apparatus according to Embodiment 1, when the controller 3 determines, in the above-described operation status, that the refrigerant flow rate through the compressor 11 is larger than that through the electronic expansion valve 21b, the notification unit 36 can provide notification of an abnormality at the high-pressure valve 46a.

In the refrigeration cycle apparatus according to Embodiment 1, the controller 3 controls the compressor 11 such that the low-pressure-side pressure Ps in the refrigeration cycle circuit 10 approaches the target low-pressure-side pressure Psm. Therefore, when the controller 3 determines, in the above-described operation status, that a value obtained by subtracting the target low-pressure-side pressure Psm from the low-pressure-side pressure Ps is larger than the threshold, the notification unit 36 can provide notification of an abnormality at the high-pressure valve 46a.

In the refrigeration cycle apparatus according to Embodiment 1, the controller 3 controls the compressor 11 such that the low-pressure-side pressure Ps in the refrigeration cycle circuit 10 approaches the target low-pressure-side pressure Psm. Therefore, when the controller 3 determines, in the above-described operation status, that the value obtained by subtracting the target low-pressure-side pressure Psm from the low-pressure-side pressure Ps is larger than the threshold and that the compressor 11 is driven at the maximum operating frequency, the notification unit 36 can provide notification of an abnormality at the high-pressure valve 46a.

After an abnormality at the low-pressure valve 45a in the above-described operation status causes an increase in refrigerant flow rate through the bypass passage 44, the low-pressure-side pressure Ps cannot be maintained at the target low-pressure-side pressure Psm even if the operating frequency of the compressor 11 is increased up to the maximum operating frequency. Therefore, the refrigeration cycle apparatus according to Embodiment 1 can detect an abnormality at the high-pressure valve 46a more accurately.

The refrigeration cycle apparatus according to Embodiment 1 further includes the operation mode switching unit 37 used to switch between operation modes of the refrigeration cycle apparatus. The operation mode switching unit 37 is switchable at least to an operation mode in which operation is performed in the above-described operation status. The refrigeration cycle apparatus according to Embodiment 1 can detect an abnormality at the high-pressure valve 46a or the electronic expansion valve 21a even while the indoor unit 2a is performing the cooling operation by, for example, temporarily causing the indoor unit 2a to enter the thermo-off state.

Embodiment 2

In the above-described refrigeration cycle apparatus according to Embodiment 1, the controller 3 performs abnormality detection for each of the high-pressure valves 46a and 46b, which are second valves, and the electronic expansion valves 21a and 21b. The detection may be performed in any other manner. The controller 3 may perform abnormality detection for a predetermined or selected valve.

In the above-described example of the refrigeration cycle apparatus according to Embodiment 1, the controller 3 controls the operating frequency of the compressor 11 such that the low-pressure-side pressure Ps in the refrigeration cycle circuit 10 approaches the target low-pressure-side pressure Psm. The control may be exercised in any other manner. For example, the operating frequency of the compressor 11 may be controlled such that the high-pressure-side pressure Pd in the refrigeration cycle circuit 10 approaches the target high-pressure-side pressure Pdm. In this case, when a value obtained by subtracting the target high-pressure-side pressure Pdm from the high-pressure-side pressure Pd is larger than a threshold, and when the compressor 11 operates at the maximum operating frequency, the controller 3 determines that an abnormality has occurred at the high-pressure valve 46a and causes the notification unit 36 to provide notification of the abnormality.

Reference Signs List

1: outdoor unit, 2, 2a, 2b: indoor unit, 3: controller, 4: flow dividing controller, 10: refrigeration cycle circuit, 11: compressor, 12: outdoor heat exchanger, 13: outdoor fan, 14: refrigerant flow switching device, 15: high-pressure-side pressure sensor, 16: low-pressure-side pressure sensor, 171, 172, 173, 174: check valve, 21, 21 a, 21b: electronic expansion valve, 22, 22a, 22b: indoor heat exchanger, 25, 25a, 25b: indoor fan, 31: storage unit, 32: extraction unit, 33: calculation unit, 34: comparison unit, 35: determination unit, 36: notification unit, 37: operation mode switching unit, 41: first junction portion, 42a, 42b: second junction portion, 43: gas-liquid separator, 44: bypass passage, 44a, 44b: branch passage, 45, 45a, 45b: low-pressure valve, 46, 46a, 46b: high-pressure valve, 47: valve, 48: low-pressure bypass passage, TH1a, TH1b: first temperature sensor, TH2a, TH2b: second temperature sensor, TH3a, TH3b: third temperature sensor

**Claims**

**1.** A refrigeration cycle apparatus, comprising:

a refrigeration cycle circuit connecting a compressor, a refrigerant flow switching device, an outdoor heat exchanger, an expansion valve, and an indoor heat exchanger, the refrigeration cycle circuit being configured to circulate refrigerant;

a first junction portion provided between the outdoor heat exchanger and the expansion valve, the first junction portion being configured to divide the refrigerant;

a second junction portion provided between the indoor heat exchanger and the refrigerant flow switching device, the second junction portion being configured to divide the refrigerant;

a bypass pipe connecting the first junction portion and the second junction portion, the bypass pipe being configured to cause the refrigerant to flow through the bypass pipe;

a first valve provided between the second junction portion and the refrigerant flow switching device;

a second valve provided to the bypass pipe;

a first temperature sensor configured to measure a temperature in a room to which air passing through the indoor heat exchanger is provided; and

a second temperature sensor configured to measure a temperature of refrigerant at a liquid portion of the indoor heat exchanger,

in an operation status in which the compressor operates, the expansion valve is fully closed, the first valve is opened, and the second valve is closed,

when a temperature measured by the first temperature sensor and a temperature measured by the second temperature sensor are different from each other,

the refrigeration cycle apparatus being configured to detect an abnormality at at least one of the expansion valve and the second valve.

2. The refrigeration cycle apparatus of claim 1, wherein when the temperature measured by the second temperature sensor is lower than the temperature measured by the first temperature sensor in the operation status, the refrigeration cycle apparatus is configured to detect an abnormality at the expansion valve.

3. The refrigeration cycle apparatus of claim 1, wherein when the temperature measured by the second temperature sensor is higher than the temperature measured by the first temperature sensor in the operation status, the refrigeration cycle apparatus is configured to detect an abnormality at the second valve.

4. The refrigeration cycle apparatus of claim 1, wherein when the compressor is operating at a maximum operating frequency, the refrigeration cycle apparatus is configured to detect an abnormality at the second valve, which is one of the expansion valve and the second valve.

5. The refrigeration cycle apparatus of claim 1, wherein

the compressor is controlled such that the compressor causes a pressure of the refrigerant on a low-pressure side of the refrigeration cycle circuit to approach a target low-pressure-side pressure, and

when the pressure of the refrigerant on the low-pressure side and the target low-pressure-side pressure are different from each other in the operation status, the refrigeration cycle apparatus is configured to detect an abnormality at the second valve, which is one of the expansion valve and the second valve.

6. The refrigeration cycle apparatus of claim 1, wherein

the compressor is controlled such that the compressor causes a pressure of the refrigerant on a high-pressure side of the refrigeration cycle circuit to approach a target high-pressure-side pressure, and

when the pressure of the refrigerant on the high-pressure side and the target high-pressure-side pressure are different from each other in the operation status, the refrigeration cycle apparatus is configured to detect an abnormality at the second valve, which is one of the expansion valve and the second valve.

7. The refrigeration cycle apparatus of any one of claims 1 to 6, further comprising a notification unit configured to provide notification of an abnormality at the valve.

8. The refrigeration cycle apparatus of any one of claims 1 to 7, wherein the refrigerant flow switching device is switched, in response to an instruction, at least to an operation mode in which operation is performed in the operation status.

# FIG. 1

FIG. 2

|  | STATE PATTERN 1 | STATE PATTERN 2 | STATE PATTERN 3 |
|---|---|---|---|
|  | NORMAL | ELECTRONIC EXPANSION VALVE 21 LOCKED IN OPENED POSITION | HIGH-PRESSURE VALVE 46 LOCKED IN OPENED POSITION |
| STATE OF ELECTRONIC EXPANSION VALVE 21 | CLOSED | OPENED | CLOSED |
| STATE OF LOW-PRESSURE VALVE 45 | OPENED | OPENED | OPENED |
| STATE OF HIGH-PRESSURE VALVE 46 | CLOSED | CLOSED | OPENED |

FIG. 3

# FIG. 4

TEMPERATURE

Tc

TH2                                    TH3
TH1

Te

REFRIGERANT
INLET OF INDOOR
HEAT EXCHANGER 22

REFRIGERANT
OUTLET OF INDOOR
HEAT EXCHANGER 22

# FIG. 5

45a
46a
44a
2a
21a    TH2a    22a    TH3a
TH1a
25a

# FIG. 6

TEMPERATURE

Tc

TH1

TH2

TH3

Te

REFRIGERANT
INLET OF INDOOR
HEAT EXCHANGER 22

REFRIGERANT
OUTLET OF INDOOR
HEAT EXCHANGER 22

# FIG. 7

45a  46a

44a

2a

21a  TH2a  22a  TH3a

TH1a

25a

FIG. 8

FIG. 9

```
                        ( START )
                            │
            ┌───────────────┴───────────────┐        NO
            │  COMPRESSOR 11 OPERATES        ├──────────────────────────────┐
            │ AND OUTDOOR HEAT EXCHANGER 12  │                              │
            │  OPERATES AS CONDENSER?        │                              │
            └───────────────┬───────────────┘                              │
                    YES    ⟍S001                                          │
            ┌───────────────┴───────────────┐        NO                    │
            │  INDOOR UNIT 2a IN THERMO-     ├───────────────────────────┐ │
            │     OFF OR STOPPED?            │                           │ │
            └───────────────┬───────────────┘                           │ │
                    YES    ⟍S002                                       │ │
            ┌───────────────┴───────────────┐                           │ │
            │  OBTAIN TH1 AND TH2 OR TH3     │                           │ │
            └───────────────┬───────────────┘                           │ │
                           ⟍S003     NO                               │ │
            ┌───────────────┴───────────────┐                           │ │
            │   TH2 = TH1 OR TH3 = TH1?      ├──────┐                    │ │
            └───────────────┬───────────────┘      │                    │ │
                    YES    ⟍S004                  │                    │ │
            ┌───────────────┴───────────────┐      │                    │ │
            │ DETERMINE THAT ABNORMALITY HAS │      │                    │ │
            │ OCCURRED AT AT LEAST ONE OF    │      │                    │ │
            │ ELECTRONIC EXPANSION VALVE 21a │      │                    │ │
            │  AND HIGH-PRESSURE VALVE 46a   │      │                    │ │
            └───────────────┬───────────────┘      │                    │ │
                           ⟍S005                  │                    │ │
            ┌───────────────┴───────────────┐      │                    │ │
            │ CAUSE NOTIFICATION UNIT 36 TO  │      │                    │ │
            │   PROVIDE NOTIFICATION OF      │      │                    │ │
            │    ABNORMALITY AT VALVE        │      │                    │ │
            └───────────────┬───────────────┘      │                    │ │
                           ⟍S006      NO          │                    │ │
            ┌───────────────┴───────────────┐      │                    │ │
            │         TH2 > TH1?             ├──┐   │                    │ │
            └───────────────┬───────────────┘  │   │                    │ │
                    YES    ⟍S007              │   │                    │ │
            ┌───────────────┴───────────────┐  │   │                    │ │
            │ DETERMINE THAT ABNORMALITY HAS │  │   │                    │ │
            │  OCCURRED AT HIGH-PRESSURE     │  │   │                    │ │
            │     VALVE 46a LOCKED IN        │  │   │                    │ │
            │      CLOSED POSITION           │  │   │                    │ │
            └───────────────┬───────────────┘  │   │                    │ │
                           ⟍S008              │   │                    │ │
            ┌───────────────┴───────────────┐  │   │                    │ │
            │ CAUSE NOTIFICATION UNIT 36 TO  │  │   │                    │ │
            │   PROVIDE NOTIFICATION OF      │  │   │                    │ │
            │ ABNORMALITY AT HIGH-PRESSURE   │  │   │                    │ │
            │         VALVE 46a              │  │   │                    │ │
            └───────────────┬───────────────┘  │   │                    │ │
                           ⟍S009              │   │                    │ │
                            │       ┌──────────┴───┴──────────┐         │ │
                            │       │ DETERMINE THAT ABNORMALITY HAS    │ │
                            │       │ OCCURRED AT ELECTRONIC            │ │
                            │       │ EXPANSION VALVE 21a LOCKED IN     │ │
                            │       │     CLOSED POSITION               │ │
                            │       └──────────┬──────────────┘         │ │
                            │                 ⟍S010                    │ │
                            │       ┌──────────┴──────────────┐         │ │
                            │       │ CAUSE NOTIFICATION UNIT 36 TO     │ │
                            │       │  PROVIDE NOTIFICATION OF          │ │
                            │       │ ABNORMALITY AT ELECTRONIC         │ │
                            │       │  EXPANSION VALVE 21a              │ │
                            │       └──────────┬──────────────┘         │ │
                            │                 ⟍S011                    │ │
                            └────────┬─────────┴────────────────────────┴─┘
                                  ( END )
```

FIG. 10

```
                    ┌──────────┐
                    │  START   │
                    └────┬─────┘
                         │
        ┌────────────────┴───────────────┐  NO
       ╱ COMPRESSOR 11 OPERATES AND       ╲────────┐
      ╱  OUTDOOR HEAT EXCHANGER 12         ╲       │
      ╲  OPERATES AS CONDENSER?            ╱       │
       ╲───────────────┬────────────────╱         │
                  YES  │      ⟍S 1 0 1             │
        ┌──────────────┴───────────────┐  NO       │
       ╱  INDOOR UNIT 2a IN             ╲──────────┤
       ╲  THERMO-OFF OR STOPPED?        ╱          │
        ╲─────────────┬───────────────╱            │
                 YES  │     ⟍S 1 0 2               │
        ┌─────────────┴────────────────┐           │
        │  OBTAIN Groc AND  Σ Gric     │           │
        └─────────────┬────────────────┘           │
                      │    ⟍S 1 0 3                 │
        ┌─────────────┴────────────────┐  NO        │
       ╱      Groc > Σ Gric?            ╲───────────┤
        ╲────────────┬─────────────────╱            │
                YES  │    ⟍S 1 0 4                  │
        ┌────────────┴─────────────────┐            │
        │ DETERMINE THAT ABNORMALITY HAS│           │
        │ OCCURRED AT HIGH-PRESSURE     │           │
        │ VALVE 46a LOCKED IN           │           │
        │ CLOSED POSITION               │           │
        └────────────┬─────────────────┘            │
                     │    ⟍S 1 0 5                  │
        ┌────────────┴─────────────────┐            │
        │ CAUSE NOTIFICATION UNIT 36 TO │           │
        │ PROVIDE NOTIFICATION OF       │           │
        │ ABNORMALITY AT HIGH-PRESSURE  │           │
        │ VALVE 46a                     │           │
        └────────────┬─────────────────┘            │
                     │    ⟍S 1 0 6                  │
                     ├──────────────────────────────┘
              ┌──────┴──────┐
              │    END      │
              └─────────────┘
```

# FIG. 11

START

COMPRESSOR 11 OPERATES AND OUTDOOR HEAT EXCHANGER 12 OPERATES AS CONDENSER? — NO

YES $\diagdown$ S 2 0 1

INDOOR UNIT 2a IN THERMO-OFF OR STOPPED? — NO

YES $\diagdown$ S 2 0 2

OBTAIN Ps AND Psm

$\diagdown$ S 2 0 3

$Ps - Psm > Pth31$? — NO

YES $\diagdown$ S 2 0 4

DETERMINE THAT ABNORMALITY HAS OCCURRED AT HIGH-PRESSURE VALVE 46a LOCKED IN CLOSED POSITION

$\diagdown$ S 2 0 5

CAUSE NOTIFICATION UNIT 36 TO PROVIDE NOTIFICATION OF ABNORMALITY AT HIGH-PRESSURE VALVE 46a

$\diagdown$ S 2 0 6

END

**INTERNATIONAL SEARCH REPORT**

International application No.

PCT/JP2019/022184

### A. CLASSIFICATION OF SUBJECT MATTER
Int.Cl. F25B49/02(2006.01)i, F24F11/38(2018.01)i, F25B13/00(2006.01)i,
F24F140/12(2018.01)n, F24F140/20(2018.01)n

According to International Patent Classification (IPC) or to both national classification and IPC

### B. FIELDS SEARCHED
Minimum documentation searched (classification system followed by classification symbols)
Int.Cl. F25B49/02, F24F11/38, F25B13/00, F24F140/12, F24F140/20

Documentation searched other than minimum documentation to the extent that such documents are included in the fields searched
Published examined utility model applications of Japan 1922-1996
Published unexamined utility model applications of Japan 1971-2019
Registered utility model specifications of Japan 1996-2019
Published registered utility model applications of Japan 1994-2019

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y<br>A | KR 10-2018-0085275 A (LG ELECTRONICS INC.) 26 July 2018, paragraphs [0022]-[0117] (Family: none) | 1-2, 7-8<br>3-6 |
| Y | JP 2000-274896 A (TOKYO GAS CO., LTD.) 06 October 2000, paragraphs [0020]-[0021] (Family: none) | 1-2, 7-8 |
| A | JP 2016-508590 A (MITSUBISHI ELECTRIC CORP.) 22 March 2016, entire text, all drawings & US 2014/0238060 A1, entire text, all drawings & CN 105008827 A | 1-8 |

☒ Further documents are listed in the continuation of Box C.   ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 23 July 2019 (23.07.2019) | 06 August 2019 (06.08.2019) |

| Name and mailing address of the ISA/<br>Japan Patent Office<br>3-4-3, Kasumigaseki, Chiyoda-ku,<br>Tokyo 100-8915, Japan | Authorized officer<br><br><br>Telephone No. |
|---|---|

Form PCT/ISA/210 (second sheet) (January 2015)

**INTERNATIONAL SEARCH REPORT**

International application No.

PCT/JP2019/022184

C (Continuation).    DOCUMENTS CONSIDERED TO BE RELEVANT

| Category* | Citation of document, with indication, where appropriate, of the relevant passages | Relevant to claim No. |
|---|---|---|
| A | KR 10-2005-0114111 A (LG ELECTRONICS INC.) 05 December 2005, entire text, all drawings (Family: none) | 1-8 |
| A | CN 106352472 A (GUANDONG MIDEA HVAC EQUIPMENT; MIDEA GROUP CO., LTD.) 25 January 2017, entire text, all drawings (Family: none) | 1-8 |

Form PCT/ISA/210 (continuation of second sheet) (January 2015)

**EP 3 982 063 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000274896 A